# EUROPÄISCHE PATENTANMELDUNG

(11) **EP 2 600 283 A1**
(43) Veröffentlichungstag der Anmeldung: **05.06.2013**
(21) Anmeldenummer: 11009521.3
(22) Anmeldetag: 02.12.2011
(51) Int. Cl.: G06K 9/00, G06K 9/74

(54) **Verfahren und Vorrichtung zur Fingerabdruckerkennung**

(71) Anmelder: Braun, Uwe Peter, 14467 Potsdam (DE)
(72) Erfinder: Braun, Uwe Peter, 14467 Potsdam (DE)
(74) Vertreter: Meinke, Dabringhaus und Partner GbR

(57) **Zusammenfassung**

Die Erfindung betrifft ein Verfahren zur Fingerabdruckerkennung, bei dem Licht in ein reflektierendes optisches Bauelement (2) gelenkt wird und aus einer Lichtaustrittsseite (8c) des Bauelementes (2) tritt und in einen Bildempfänger (17) geleitet wird. Um das Verfahren derart weiterzuentwickeln, dass eine erhöhte Sicherheit bei der Verifizierung durch Fingerabdruckerkennung gewährleitet ist, sieht die Erfindung vor, dass zwischen Lichtaustrittsseite (8c) und Bildempfänger (17) das Licht gebeugt und dabei ein Beugungsbild (7) erzeugt wird.

## Beschreibung

Die Erfindung betrifft ein Verfahren zur Fingerabdruckerkennung, bei dem Licht in ein reflektierendes optisches Bauelement gelenkt wird und aus einer Lichtaustrittsseite des Bauelementes tritt und in einen Bildempfänger geleitet wird.

Zudem betrifft die Erfindung ein Verifizierungssystem zur Durchführung des Verfahrens.

Verfahren der eingangs genannten Art sind dem Fachmann bekannt und als Methode zur Verifizierung der Zugangsberechtigung zu hochsensiblen Sicherheitsbereichen seit langem anerkannt.

Hierbei wird die Erkenntnis genutzt, dass die Papillarleistenmuster eines Menschen einzigartig und unveränderbar sind, dass also Menschen über keine identischen Papillarleisten verfügen.

Zur Verifizierung wird dabei das Papillarleistenmuster bezüglich der Gestalt und Anordnung des Musters geprüft.

Die Abnahme des Papillarleistenmusters erfolgt derart, dass die Oberfläche der Fingerbeere auf eine Seite, die sogenannte Fingerabdruckseite, des reflektierenden optischen Bauelementes gelegt wird. Bei dem reflektierenden optischen Bauelement handelt es sich in der Regel um ein Prisma. Eine andere optische Aufnahmeart ist die Nutzung einer Glasfaseroberfläche anstatt der Verwendung eines Prismas.

Bei dem Verfahren der eingangs genannten Art wird die Fingerbeere über ein Prisma oder eine Glasfaseroberfläche durch eine Lichtquelle, die vorzugsweise in Form einer LED vorliegt, beleuchtet. Die Papillarlinien liegen auf der Prisma- bzw. Glasfaseroberfläche auf, wobei zwischen den Rillentälern der Fingerbeere Luft eingeschlossen ist. Das Licht der Lichtquelle wird gezielt in das reflektierende optische Bauelement gelenkt und an den Rillenlinien der Fingerbeere absorbiert und an den Papillarlinien der Fingerbeere über das reflektierende optische Bauelement reflektiert. Hierbei tritt das Licht aus einer Lichtaustrittsseite des reflektierenden optischen Bauelementes aus und wird durch eine spezielle Position des Bildempfängers in den Bildempfänger geleitet. Der Bildempfänger liegt dabei zumeist als Kamera vor. Die Papillarlinien erscheinen dunkel, die Rillentäler dagegen hell aus dem daraus resultierenden Bild.

Verfahren der eingangs genannten Art beruhen also auf dem Vorgang der Totalreflexion, d.h. die Lichtquelle beleuchtet die transparente Fingerabdruckseite durch das Prisma hindurch unter einem Winkel von 45°, der größer ist als der Grenzwinkel der Totalreflexion. Ohne Fingerbeere auf der Fingerabdruckseite wird infolgedessen das gesamte in das optische Bauelement einfallende Licht an der Grenzschicht total reflektiert. Liegt eine Fingerbeere auf der Fingerabdruckseite, hat dies also zur Folge, dass zwischen den einzelnen Papillarleisten Luft eingeschlossen ist, so dass das Licht auch hier total reflektiert wird. Nur dort, wo die Papillarleisten in direktem Kontakt mit der Fingerabdruckseite des optischen reflektierenden Bauelementes stehen, erhöht sich aufgrund des geänderten Brechzahlverhältnisses der Grenzwinkel, so dass keine Totalreflexion mehr stattfindet.

Sichere Verifizierungsmethoden haben in jüngster Vergangenheit weiter zunehmend an Bedeutung gewonnen.

Es ist deshalb Aufgabe der vorliegenden Erfindung, ein Verfahren der eingangs genannten Art derart weiterzuentwickeln, dass eine erhöhte Sicherheit bei der Verifizierung durch Fingerabdruckerkennung gewährleistet ist.

Diese Aufgabe wird mit den Merkmalen des Anspruches 1 gelöst. Vorteilhafte Ausgestaltungen der Erfindung ergeben sich aus den abhängigen Ansprüchen.

Die Erfindung sieht vor, dass zwischen Lichtaustrittsseite und Bildempfänger das Licht gebeugt und dabei ein Beugungsbild erzeugt wird.

Die Kernidee der Erfindung ist es, das Fingerbild während der Übertragung, d.h. zwischen dem mit einer Fingerabdruckseite versehenen optischen reflektierenden Bauelement und dem Bildempfänger, optisch wirksam zu verschlüsseln. Somit gelangt nicht das reflektierte bzw. gestreute Licht, sondern das gebeugte Licht in den Bildempfänger. Durch das Beugungsbild wird infolgedessen ein zusätzliches Instrumentarium geschaffen, ein charakteristisches Fingerabdruckbild zu verschlüsseln und somit einen Verifizierungsvorgang noch sicherer zu gestalten.

Um das gebeugte Licht in den Bildempfänger zu lenken, ist es von Vorteil, dass das Licht vor Eintritt in den Bildempfänger und nach der Beugung durch mindestens eine Linse geleitet wird. Nach einer ganz besonders bevorzugten Ausführungsform der Erfindung ist vorgesehen, dass das Licht durch ein Linsensystem geleitet wird, das aus zwei bikonvexen und einer bikonkaven Linse besteht. Hierbei gelangt das Licht zunächst durch die zwei hintereinander angeordneten bikonvexen Linsen. Diese bevorzugte Linsenkombination bietet auch den Vorteil, dass das Beugungsbild verkleinert und vor Eintritt in den Bildempfänger in ein reflektierendes optisches Bauelement, das vorzugsweise als Prisma vorliegt, gelenkt werden kann, um auch einen größeren Fingerabdruck optimal verarbeiten zu können.

Um eine gute Ausleuchtung des Fingerabdrucks zu erreichen, ist im Rahmen der Erfindung weiterhin vorgesehen, dass das reflektierende optische Bauelement von weiteren Lichtquellen bestrahlt wird. Hierdurch wird vorteilhafterweise erreicht, dass das Abbild des Fingerabdrucks auf dem reflektierenden optischen Bauelement deutlich verstärkt wird. Zudem führt die mit Bestrahlung des Fingerabdrucks einhergehende Belichtung in dem reflektierenden optischen Bauelement zu einem Phasensprung, der das erzeugte Beugungsmuster deutlich verstärkt, was wiederum zweckmäßigerweise mit einer Reduzierung der für die Bildverarbeitung erforderlichen Daten einhergeht.

Zur Durchführung des Verfahrens sieht die Erfindung ein Verifizierungssystem vor, das mit einer Lichtquelle und einem Bildempfänger versehen ist. Weitere Bestandteile des erfindungsgemäßen Verifizierungssystems ist ein reflektierendes optisches Bauelement mit einer Lichteintrittsseite und einer Lichtaustrittsseite sowie mit einer Fingerabdruckseite und ein optisches Bauelement zur Erzeugung eines Beugungsbildes, das zwischen dem reflektierenden optischen Bauelement und dem Bildempfänger angeordnet ist.

Im Folgenden wird die Erfindung anhand der Zeichnung näher erläutert. Es zeigt in schematischer Darstellung:

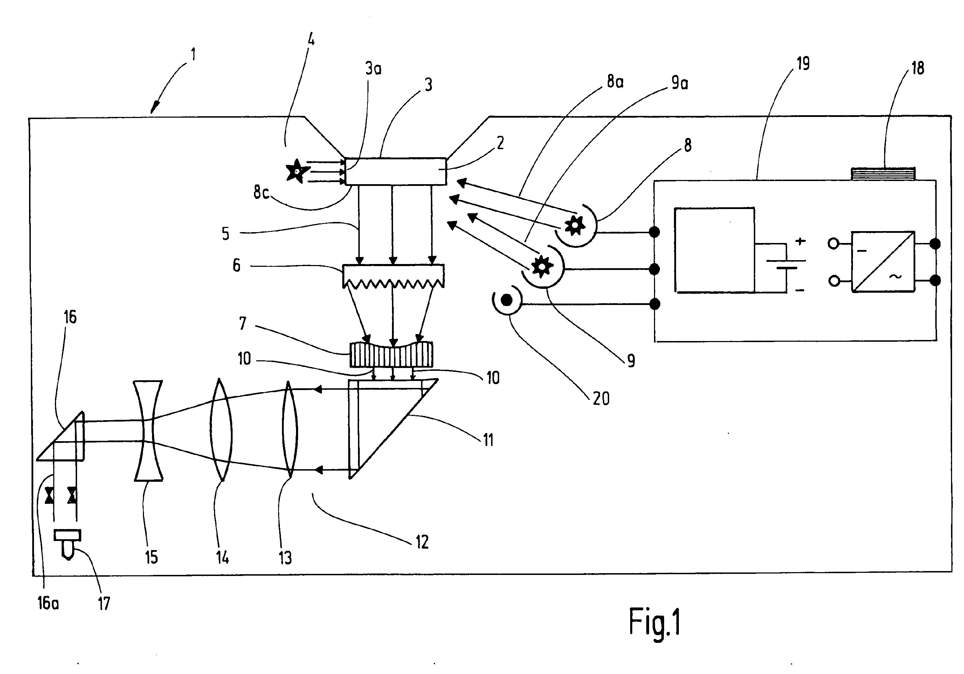

- Fig. 1: ein Verfahren gemäß der Erfindung.

Das in Fig. 1 dargestellte erfindungsgemäße Verfahren beginnt in dem Verifizierungssystem 1 mit der Beleuchtung des eine Fingerabdruckseite 3 aufweisenden reflektierenden optischen Bauelementes 2 durch die als Leuchtdiode ausgebildete Lichtquelle 4, indem Licht durch die Lichteintrittsseite 3a gelenkt wird. Durch die optischen Eigenschaften des reflektierenden optischen Bauelementes 2 kommt es bei einer entsprechenden Positionierung der Lichtquelle 4 in dem reflektierenden optischen Bauelement 2 zu einer Totalreflexion, die das Abbild einer auf der Fingerabdruckseite 3 gelegten Fingerbeere deutlich verstärkt.

Die Fingerabdruckseite 3 hat in der in Fig. 1 gezeigten Ausführungsform die Form eines Rechtecks. Es kann allerdings als reflektierendes optisches Bauelement 2 auch ein Prisma verwendet werden, dessen Fingerabdruckseite die Form eines Dreiecks aufweist.

Dem reflektierenden optischen Bauelement 2 ist ein optisches Bauelement 6 zur Erzeugung eines Beugungsbildes 7 zugeordnet. Hierzu ist das optische Bauelement 6 derart positioniert, dass die in dem reflektierenden optischen Bauelement 2 reflektierte Lichtstrahlung 5 durch die Lichtaustrittsseite 8c aus dem optischen Element 6 tritt. Das Beugungsbild 7 wird dabei durch das optische Bauelement 6 in Gestalt einer Prismenplatte hervorgebracht. Die Verwendung einer Prismenplatte für die Erzeugung von Beugungsbildern ist auch in dem Patent DE 103 00 482 B3 offenbart.

In erfindungswesentlicher Weise wird also nach Austritt des Lichts 5 aus dem reflektierenden optischen Bauelement 2, d.h. zwischen dem reflektierenden optischen Bauelement 2 und dem Bildempfänger 17 das Licht 5 gebeugt und ein Beugungsbild 7 erzeugt.

Dem reflektierenden optischen Bauelement 2 sind zwei weitere Lichtquellen 8, 9 in Gestalt von Leuchtdioden zugeordnet, die derart positioniert sind, dass die Belichtung des reflektierenden optischen Bauelementes 2 durch die Lichtstrahlung 8a, 9a der Lichtquellen 8, 9 zu einem Phasensprung der in das reflektierende optische Bauelement 2 einfallenden und in dem reflektierenden optischen Bauelement 2 reflektierten Lichtstrahlen 8a, 9a führt, was wiederum zur Folge hat, dass das Beugungsbild 6 noch deutlich stärker hervortritt. Da zudem die Lichtquelle 8 kurzwelliges und die Lichtquelle 9 langwelliges Licht ausstrahlt, werden die Papillarlinien der auf der Fingerabdruckseite 3 liegenden Fingerbeere besonders stark differenziert hervorgehoben. Zudem wird durch einen in der Steuerung 18 befindlichen Generator bei den Lichtquellen 8,9 ein schneller Lichtwechsel erzeugt.

Wie Fig. 1 weiter zu erkennen gibt, erfährt das durch das optische Bauelement 2 hervorgerufene Beugungsbild 7 eine weitere Modifikation, indem die gebeugten Lichtstrahlen 10 in ein Prisma 11, das sich dem optischen Bauelement 6 räumlich anschließt, gelenkt und darin abgelenkt werden und somit das Licht nach der Beugung eine erste Reflexion erfährt. Das Prisma 11 bietet den Vorteil, dass es so dimensioniert ist, dass eine ausreichende Größe der Fingerbeere aufgenommen und der weiteren Bildauswertung zugeführt werden kann.

Dem Prisma 11 schließt sich räumlich ein Linsensystem 12 an. Das Linsensystem 12 besteht aus drei Linsen 13, 14, 15. Die dem Prisma 11 nächst zugewandte Linse 13 ist eine bikonvexe Linse, der sich die Linse 14 anschließt, die ebenfalls in Form einer bikonvexen Linse vorliegt. Das Linsensystem 12 schließt mit der als bikonkave Linse ausgebildeten Linse 15 ab. Durch das Linsensystem 12 wird das in dem Prisma 11 abgelenkte Licht gesammelt und dem Prisma 16 zugeführt, das vor dem als Kamera ausgebildeten Bildempfänger 17 angeordnet ist und in dem das Licht nach der Beugung eine zweite Reflexion erfährt.

Um den Vorgang der Verifizierung einer Zugangsberechtigung eines Benutzers, eines in Fig. 1 nicht gezeigten I-Pads, durchzuführen, wird das Verifizierungssystem 1 zunächst mit dem I-Pad verbunden. Sobald die Verbindung zwischen I-Pad und Verifizierungssystem 1 hergestellt ist, wird die Startertaste 18 der Steuerung 19 des Verifizierungssystems 1 betätigt, um zu signalisieren, dass der Benutzer eine Fingerbeere auf die Fingerabdruckseite 3 des reflektierenden optischen Bauelementes 2 legen kann. Das Signal für den Benutzer erfolgt durch Aufleuchten der Lichtquelle 9, die mit der Steuerung 19 in Verbindung steht. Die Steuerung 19 enthält sämtliche für die Steuerung des Verifizierungsvorganges und Verbindung mit dem I-Pad notwendigen Komponenten, die vorzugsweise als funktionelle Module vorliegen, wie WLAN-Modul, Controller und Stromversorgung.

Die Verbindung zwischen dem Verifizierungssystem 1 und dem I-Pad erfolgt über das WLAN-Modul in der Steuerung 19 sowie ein entsprechendes WLAN-Modul in dem I-Pad. Nachdem die reflektierten Lichtstrahlen 16a den Bildempfänger 17 erreicht haben und die Bearbeitung des Fingerabdruckbildes stattgefunden hat, wird die WLAN-Verbindung aufgefordert, die gewonnenen biometrischen Daten in einer gesicherten Cloud, einem Server, einem Netzwerk oder einer Applikation, zu hinterlegen. Das Template des Fingerabdruckbildes wird so hinterlegt. Wird ein erneuter Verifizierungsvorgang gestartet, dem eine erneute Erfassung und Messung des Fingerabdrucks in dem Verifizierungssystem 1 vorgeschaltet ist, wird der erneut gemessene Fingerabdruck mit dem Template verglichen.

Die Steuerung dieses Verifizierungsvorganges erfolgt dabei über einen Controller in der Steuerung 19. Wird eine Übereinstimmung der biometrischen Merkmale festgestellt, erfolgt die Zugangsberechtigung. Der Messzyklus kann dabei über die Lichtquelle 20 gesteuert werden, indem die Lichtquelle 20 aktiviert wird, sobald die aufgelegte Fingerbeere die Leuchtdichte der Lichtquelle 9 erhöht. Wird dabei die Fingerbeere von der Fingerabdruckseite 3 entfernt, entfallen die Reflexionen an der Fingerabdruckseite 3 und die Lichtquelle 20 kann die endgültige Freigabe des Zuganges, beispielsweise zu einem Netzwerk, geben.

Die vorliegende Erfindung beschränkt sich in ihrer Ausführung nicht auf das vorstehend angegebene Ausführungsbeispiel. Vielmehr ist eine Anzahl von Varianten denkbar, welche von der dargestellten Lösung auch bei anders gearteten Ausführungen Gebrauch machen. Beispielsweise kann neben der Übertragung der Daten zwischen dem Verifizierungssystem 1 und dem I-Pad die Übertragung auch über NFC-Technik erfolgen.

Zudem kann im Rahmen der Erfindung von der Pulsoximetrie Gebrauch gemacht werden, indem die Haut in dem Bereich der Fingerbeere durchleuchtet wird. Gemessen werden dabei drei Werte, die Absorption des Lichts im Wellenlängenbereich 660 nm durch die Lichtquellen 8, 20 sowie den 940 nm-Bereich durch die Lichtquellen 9, 20. Zudem wird, und zwar zur Tarierung, die Strahlung 9a der Lichtquelle 9 gemessen. Die unterschiedliche Absorption des Lichts ergibt eine Differenz, aus der ein Rückschluss auf den Benutzer gezogen werden kann. Die Messung wird über die Steuerung 19 ausgewertet und technisch verschlüsselt. Die Messung erfasst dabei das pulsierend durchströmende Blut in der Fingerbeere des Benutzers. Anhand eines Vergleichs des Messergebnisses mit einem Referenzspeicher wird schließlich in herkömmlicher Weise ein Überwachungsmonitor ermittelt.

### Bezugszeichenliste:

- 1: Verifizierungssystem
- 2: optisches Bauelement
- 3: Fingerabdruckseite
- 3a: Lichteintrittsseite
- 4: Lichtquelle
- 5: Lichtstrahlung
- 6: optisches Bauelement
- 7: Beugungsbild
- 8c: Lichtaustrittsseite
- 8, 9: Lichtquellen
- 8a, 9a: Lichtstrahlung
- 10: Lichtstrahlen
- 11: Prisma
- 12: Linsensystem
- 13, 14, 15: Linsen
- 16: Prisma
- 17: Bildempfänger
- 18: Startertaste
- 19: Steuerung
- 20: Lichtquelle

## Patentansprüche

1. Verfahren zur Fingerabdruckerkennung, bei dem Licht in ein reflektierendes optisches Bauelement (2) gelenkt wird und aus einer Lichtaustrittsseite (8c) des Bauelementes (2) tritt und in einen Bildempfänger (17) geleitet wird,
**dadurch gekennzeichnet,**
**dass** zwischen Lichtaustrittsseite (8c) und Bildempfänger (17) das Licht gebeugt und dabei ein Beugungsbild (7) erzeugt wird.

2. Verfahren nach Anspruch 1,
**dadurch gekennzeichnet,**
**dass** zur Erzeugung des Beugungsbildes (7) eine Prismenplatte verwendet wird.

3. Verfahren nach Anspruch 1 oder 2,
**dadurch gekennzeichnet,**
**dass** nach Beugung des Lichts und vor Eintritt des Lichts in den Bildempfänger (17) das Licht reflektiert wird.

4. Verfahren nach Anspruch 3,
**dadurch gekennzeichnet,**
**dass** zur Erzeugung der Reflexion ein Prisma (11,16) verwendet wird.

5. Verfahren nach einem der vorhergehenden Ansprüche,
**dadurch gekennzeichnet,**
**dass** vor Eintritt des Lichts in den Bildempfänger (17) und nach Beugung des Lichts das Licht durch ein Linsensystem (12) geleitet wird.

6. Verfahren nach Anspruch 5,
**dadurch gekennzeichnet,**
**dass** das Licht nach einer ersten Reflexion durch das Linsensystem (12) geleitet wird.

7. Verfahren nach einem der vorhergehenden Ansprüche,
**dadurch gekennzeichnet,**
**dass** das Licht vor Eintritt in den Bildempfänger (17) und nach Beugung des Lichts eine zweite Reflexion erfährt.

8. Verfahren nach einem der vorhergehenden Ansprüche,
**dadurch gekennzeichnet,**
**dass** Lichtquellen (4,8,9) das reflektierende optische Bauelement (2) belichten und dabei derart angeordnet sind, dass dabei Totalreflexionen und Phasensprünge in dem Bauelement (2) hervorgerufen werden.

9. Verfahren nach Anspruch 8,
**dadurch gekennzeichnet,**
**dass** die Lichtquellen (8,9) jeweils Licht im kurzwelligen oder langwelligen Bereich erzeugen.

10. Verfahren nach einem der Ansprüche 5 bis 9,
**dadurch gekennzeichnet,**
**dass** für das Linsensystem (12) eine bikonkave Linse (15) und zwei bikonvexe Linsen (13,14) verwendet werden.

11. Verfahren nach einem der Ansprüche 8 bis 10,
**dadurch gekennzeichnet,**
**dass** mittels mindestens einer Lichtquelle (8,9) Licht in das mittels der ersten Reflexion reflektierte Licht geleitet wird.

12. Verifizierungssystem (1) zur Durchführung des Verfahrens gemäß einem der Ansprüche 1 bis 11, aufweisend:
- eine Lichtquelle (4),
- ein reflektierendes optisches Bauelement (2) mit einer Lichteintrittsseite (3a) und einer Lichtaustrittsseite (8c) sowie mit einer Fingerabdruckseite (3),
- einen Bildempfänger (17),
**dadurch gekennzeichnet,**
**dass** zwischen dem reflektierenden optischen Bauelement (2) und dem Bildempfänger (17) ein optisches Bauelement (6) zur Erzeugung eines Beugungsbildes (7) angeordnet ist.

13. System nach Anspruch 12,
**dadurch gekennzeichnet,**
**dass** zwischen dem optischen Bauelement (6) und dem Bildempfänger (17) ein erstes reflektierendes optisches Bauelement (11) und/oder ein Linsensystem (12) und/oder ein zweites reflektierendes optisches Bauelement (16) angeordnet sind.

14. System nach Anspruch 12 oder 13,
**dadurch gekennzeichnet,**
**dass** es eine Steuerung (19) aufweist.

15. System nach einem der Ansprüche 12 bis 14,
**dadurch gekennzeichnet,**
**dass** dem reflektierenden optischen Bauelement (2) weitere Lichtquellen (8,9,20) zugeordnet sind.

16. Verwendung eines Systems gemäß den Ansprüchen 12 bis 15 für einen Tablet-PC.
